(19) Europäisches Patentamt
European Patent Office
Office européen des brevets

(11) Numéro de publication : **0 415 809 B1**

(12) # FASCICULE DE BREVET EUROPEEN

(45) Date de publication du fascicule du brevet : **01.12.93 Bulletin 93/48**

(51) Int. Cl.$^5$ : **C08G 73/10,** H01B 3/30, C08K 5/05, C08L 79/08

(21) Numéro de dépôt : **90402158.1**

(22) Date de dépôt : **26.07.90**

(54) **Compositions de precurseurs de polyimides et leurs applications.**

(30) Priorité : **08.08.89 FR 8910757**

(43) Date de publication de la demande : **06.03.91 Bulletin 91/10**

(45) Mention de la délivrance du brevet : **01.12.93 Bulletin 93/48**

(84) Etats contractants désignés : **BE CH DE GB IT LI LU NL SE**

(56) Documents cités :
**DE-A- 1 913 280**
**FR-A- 2 222 402**
**US-A- 4 374 221**
**CHEMICAL ABSTRACTS vol. 81, no. 18, 4 novembre 1974, page 114, abrégé no. 107548j, Columbus, Ohio, US; & JP-A-7434598**
**DATABASE WPIL no. 85 84095, Derwent Publications Ltd., London, GB; & JP-A-8926372**

(73) Titulaire : **INSTITUT FRANCAIS DU PETROLE 4, Avenue de Bois Préau F-92502 Rueil-Malmaison (FR)**

(72) Inventeur : **Gonzalez, Serge Résidence "Clos du Pensionnat" Bâtiment B, F-69150 Decines (FR)**
Inventeur : **Mariaggi, Paul La Rivoire 3 F-38200 Seyssuel (FR)**
Inventeur : **Rabilloud, Guy 27, Boulevard Clémenceau F-38100 Grenoble (FR)**
Inventeur : **Sillion, Bernard 93, rue Joliot Curie F-69005 Lyon (FR)**

(74) Mandataire : **Andreeff, François et al INSTITUT FRANCAIS DU PETROLE 4, avenue de Bois-Préau F-92502 Rueil-Malmaison (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 415 809 B1

Jouve, 18, rue Saint-Denis, 75001 PARIS

## Description

La présente invention concerne des compositions de précurseurs de polyimide et leurs utilisations, notamment pour la réalisation de revêtements isolants, de films diélectriques, de revêtements d'aplanissement, de couches de protection et pour de nombreuses applications dans le domaine des industries électriques et électroniques. Elle concerne plus particulièrement des compositions formées en préparant un mélange de monomères et d'oligomères autocondensables, précurseurs de polyimides thermostables, avec au moins un composé comportant une fonction hydroxyle choisi dans le groupe des composés hydroxylés définis ci-après.

Ces compositions ou les solutions de ces compositions dans un solvant ou un mélange de solvants présentent l'avantage d'être beaucoup plus stables que les solutions usuelles de précurseurs de polyimides, qui sont généralement des polyamide-acides. Ces dernières sont en effet très sensibles à toute élévation de la température, ce qui exige une conservation de préférence au-dessous de 5°C, et à la présence d'humidité qui dégrade le polymère par hydrolyse des groupements amide-acide. Par contre, les compositions de l'invention sont remarquablement stables et leur durée de conservation peut atteindre plusieurs mois la température ambiante sans qu'il y ait de changements importants dans les caractéristiques de ces solutions de précurseurs de polyimides par rapport à leurs caractéristiques initiales.

L'invention concerne également l'utilisation de ces compositions, notamment leur utilisation pour la fabrication de revêtements isolants notamment pour la protection des métaux comme le fer, l'acier, l'aluminium, le cuivre, le laiton, le cuivre nickelé, les alliages métalliques, le titane, ou d'autres substrats par exemple semiconducteurs comme le silicium, le germanium et l'arséniure de gallium. Elle concerne aussi l'utilisation plus particulière de ces compositions pour la fabrication de couches d'aplanissement notamment dans la fabrication des circuits intégrés ou dans la fabrication des systèmes d'interconnexion multicouches.

Les compositions de l'invention sont particulièrement bien adaptées à ces dernières applications qui font intervenir des films ou des couches diélectriques dont le rôle est de séparer plusieurs niveaux d'interconnexions métalliques. A titre d'exemple, la structure supérieure d'un circuit intégré semiconducteur peut comporter deux niveaux d'interconnexion. Une première couche d'éléments conducteurs par exemple polysilicium, aluminium ou tungstène est déposée sur la surface du semiconducteur. Un film isolant diélectrique est ensuite déposé sur ce premier niveau d'interconnexion. Des trous de contact sont percés dans la couche diélectrique en des endroits bien déterminés du circuit. Le second niveau d'interconnexion est réalisé en formant un film métallique, par exemple par évaporation à haute température, et en gravant dans ce film les lignes conductrices par les méthodes conventionnelles de gravure. Une dernière couche de film isolant peut être ajoutée pour protéger le circuit intégré d'une éventuelle contamination par des agents extérieurs.

La surface d'un circuit intégré n'est pas plane car les éléments actifs ont été fabriqués par une série d'opérations de gravure et de dépôts successifs. Elle comporte donc une multitude d'éléments en relief ou marches et d'éléments en creux ou tranchées. Il est particulièrement important que le film diélectrique déposé sur cette surface irrégulière puisse recouvrir les marches et combler les tranchées en donnant une surface aussi plane que possible. Le degré d'aplanissement tel qu'il a été défini par L.B. Rothman (Journal of Electrochemical Society 1980, 127, 2116-2120) est calculé à l'aide de la formule suivante

$$\varepsilon = 1 - h_2/h_1$$

dans laquelle $\varepsilon$ représente le degré d'aplanissement, $h_1$ représente la hauteur initiale d'une marche métallique par exemple, et $h_2$ la dénivellation obtenue au-dessus de cette même marche après le dépot de la couche isolante. Cette formule montre que si la surface finale est parfaitement plane, c'est à dire si $h_2 = 0$, on a $\varepsilon = 1$. Par contre si la hauteur de marche finale est égale à la hauteur de marche initiale ($h_1 = h_2$), il n'y a pas eu d'aplanissement du tout et $\varepsilon$ est égal à 0. Le degré d'aplanissement $\varepsilon$ varie donc entre 0 et 1 et la surface finale est d'autant plus plane que la valeur du coefficient d'aplanissement est plus proche de 1.

L'une des méthodes utilisée pour réaliser les couches isolantes consiste à employer des résines de polyimides ou de précurseurs de polyimides comme les polyamide-acides. Comme exemples de tels produits, on peut citer le produit commercialisé par la firme Hitachi Chemical Company sous la référence PIQ 13 ou la série des produits commercialisés par la firme Du Pont de Nemours sous le nom de "Pyralins".

Ces polymères ont d'excellentes caractéristiques filmogènes, de bonnes propriétés diélectriques et une excellente stabilité thermique, mais leur pouvoir d'aplanissement qui se situe habituellement entre 0,15 et 0,4 est relativement faible. L'une des raisons en est que la concentration en polymère dans ces solutions est le plus souvent inférieure à 20% en poids car au-delà de cette valeur, la viscosité dynamique des solutions est trop forte pour que celles-ci soient utilisables pour déposer des films minces ayant, par exemple une épaisseur inférieure à 2 micromètres ($\mu$m).

Dans la plupart des applications, les films diélectriques sont déposés sur les semiconducteurs par rotation à l'aide d'une tournette. Dans ces conditions, il a été montré (S.A. Jenekhe, "Polymers for High Technology", ACS Symposium Series, Vol. 346, 1987, p. 261) que le pouvoir d'aplanissement d'une solution de polymère

était gouverné par de nombreux paramètres tels que le volume de solution déposé, la volatilité du solvant, la température, la concentration en polymère, la viscosité de la solution, la vitesse de rotation de la tournette, la durée de rotation et le comportement du polymère pendant le traitement final de séchage et de cuisson. L'un de ces paramètres, la concentration en matière sèche, joue un rôle particulièrement important dans le pouvoir d'aplanissement. Ce phénomène a été mis en évidence avec des polyimides ou du polyméthacrylate de méthyle (D.B. LaVergne et D.C. Hofer, SPIE 1985 Vol.539 "Advances in Resist Technology and Processing II", p.115). Cette observation a été confirmée par L.E. Stillwagon (Solid State Technology, June 1987, p.67) en comparant les résines conventionnelles avec un époxyde cycloaliphatique liquide mis en oeuvre sans solvant. Ce dernier composé permet d'atteindre un degré d'aplanissement très élevé, de l'ordre de 0,7 à 0,9. Mais les résines époxydes ou phénoliques ne sont utilisables que comme aides à la fabrication car elles n'ont pas une stabilité thermique suffisante pour supporter les opérations de métallisation à haute température.

Actuellement seuls les polymères hétérocycliques thermostables, et en particulier les polyimides et les polyphénylquinoxalines, sont utilisés comme diélectriques intermétalliques. On a signalé précédemment que la limite supérieure de la concentration en matière sèche dans les solutions usuelles de polyamide-acides, précurseurs de polyimides, était de l'ordre de 20%. Pour améliorer les caractéristiques d'aplanissement des polyimides, il est indispensable d'augmenter la concentration en polymère pour atteindre une valeur aussi élevée que possible.

Des solutions plus concentrées en polymères précurseurs de polyimides ont été préparées soit en utilisant un réactif à effet retard (brevet US-A-4.720.539), soit en préparant des oligomères de faible masse moléculaire en remplaçant, dans la synthèse des polyimides, les dianhydrides d'acides aromatiques tétracarboxyliques par des bis(*ortho*-acide-esters) beaucoup moins réactifs (brevet EP-A-251.828). Ces méthodes permettent d'atteindre des concentrations en matière sèche de l'ordre de 30%, mais la qualité des films préparés selon cette dernière technique est inférieure à celle des films obtenus à partir des polyamide-acides conventionnels de haute masse moléculaire. L'une des raisons en est que l'essentiel de la réaction de polycondensation doit s'effectuer en phase solide, après évaporation du solvant, et que la mobilité des molécules n'est plus suffisante pour que les centres réactifs antagonistes aient une forte probabilité de rencontre.

On a découvert, et c'est l'un des objets de l'invention, que certaines compositions, préparées en mélangeant des monomères autocondensables précurseurs de polyimides avec des oligomères autocondensables issus de la prépolycondensation partielle desdits manomères et un composé organique liquide, portant une fonction hydroxyle et défini ci-après, présentaient des propriétés d'aplanissement remarquables.

Ces compositions ont une teneur en matière sèche très élevée, habituellement d'environ 30% à environ 70% en poids, une viscosité dynamique tout à fait adaptée au dépôt par rotation ou par sérigraphie, et des caractéristiques de fluage à l'état viscoplastique qui permettent d'effectuer dans de bonnes conditions une polycondensation en phase solide ou en phase viscoplastique. La préparation des compositions de précurseurs de polyimides selon l'invention fait par exemple intervenir comme produit de départ un mélange de deux monomères isomères autocondensables, dont la synthèse est par exemple décrite dans le brevet US-A-3.609.123 et dont les formules générales (1) et (2) sont décrites ci-après. Les monomères de formules (1) et (2) sont solubles dans de très nombreux solvants organiques polaires comme par exemple dans le diméthylformamide, le diméthylacétamide, la N-méthylpyrrolidone, le diméthylsulfoxyde, le dioxane, le diglyme, ou des mélanges de ces solvants. Mais dans la plupart des cas, ces solvants ne permettent pas de préparer des films de bonne qualité, soit que les oligomères précipitent dès le début de la réaction, soit que la plastification des précurseurs de polyimides par le solvant ne soit pas suffisante pour donner des films souples et élastiques.

On a découvert que, de manière surprenante, certains composés portant des fonctions hydroxyle comme l'alcool benzylique et les alcools de type benzylique étaient non seulement de bons solvants du mélange des monomères de formules (1) et (2) et des oligomères de formule (3), mais facilitaient la réaction de prépolycondensation en solution desdits monomères et la réaction ultérieure de polycondensation en phase solide ou en phase viscoplastique pour donner des films diélectriques ayant une excellente cohésion et dépourvus de défauts de structure.

Dans le cadre de la présente invention, on a découvert que le mélange des monomères (1) et (2) avec les oligomères (3) est soluble dans l'alcool benzylique tant que la masse moléculaire moyenne des oligomères reste relativement faible. De façon surprenante, c'est le mélange des trois types de composés qui conduit à des solutions stables dans le temps. En effet, lorque les monomères (1) et (2) sont dissous dans l'alcool benzylique, par exemple par un chauffage de courte durée à température modérée, par exemple entre 50°C et 80°C, la solution obtenue reste limpide pendant quelques jours seulement. Il y a ensuite reprécipitation des monomères sous forme d'un solide pulvérulent de couleur beige clair. Par contre, lorsque les monomères sont associés à une certaine proportion d'oligomères de formule (3), les solutions peuvent rester stables pendant plusieurs mois à la température ambiante.De façon plus précise, la présente invention concerne des compositions de précurseurs de polyimides comprenant:

a) au moins un composé de formule générale

(1) 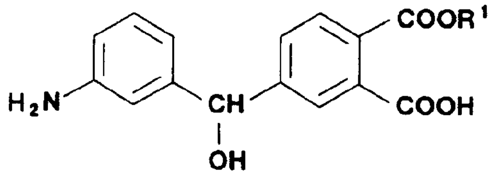

dans laquelle $R^1$ représente un groupe hydrocarboné ayant de 1 à 16 atomes de carbone, de préférence de 1 à 12 atomes de carbone et le plus souvent de 1 à 4 atomes de carbone,
b) au moins un composé de formule générale

(2) 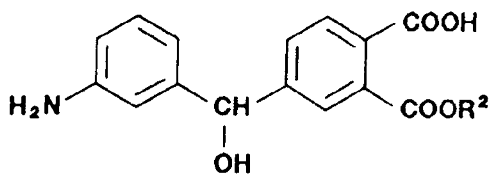

dans laquelle $R^2$ représente un groupe hydrocarboné ayant de 1 à 16 atomes de carbone, de préférence de 1 à 12 atomes de carbone et le plus souvent de 1 à 4 atomes de carbone,
c) au moins un composé, dit oligomère autocondensable, et obtenu habituellement par prépolycondensation partielle d'au moins un monomère de formule (1) et/ou (2), de formule générale

(3) 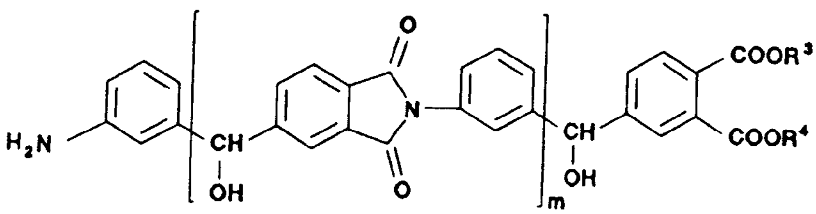

dans laquelle m représente un nombre de 5 à 20, de préférence de 6 à 18 et le plus souvent de 7 à 15, l'un des groupes $R^3$ et $R^4$ représente un atome d'hydrogène et l'autre représente un groupe hydrocarboné ayant de 1 à 16 atomes de carbone, de préférence de 1 à 12 atomes de carbone et le plus souvent de 1 à 4 atomes de carbone, et en une proportion de 10 à 50% en poids par rapport au poids de matière sèche de l'ensemble de la composition, et
d) au moins un composé hydroxylé de formule générale

(4) 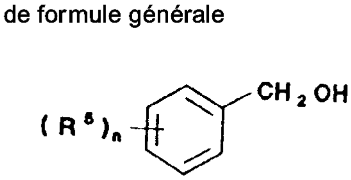

dans laquelle n est un nombre entier de 1 à 5, de préférence 1 ou 2 et le plus souvent 1, $R^5$ représente un atome d'hydrogène, un atome d'halogène (chlore, brome, iode ou fluor); un groupe hydrocarboné ayant de 1 à 16 atomes de carbone, de préférence de 1 à 12 atomes de carbone et le plus souvent de 1 à 4 atomes de carbone ou un groupe de formule $R^6$-O- dans laquelle $R^6$ représente un groupe hydrocarboné ayant de 1 à 16 atomes de carbone, de préférence de 1 à 12 atomes de carbone et le plus souvent de 1 à 4 atomes de carbone, ainsi que, éventuellement de 1% à 70% en poids, par rapport au poids du composé (4), d'au moins un composé organique liquide autre que le ou les alcools benzyliques de formule (4) choisi dans le groupe formé par les alcools et les éthers-alcools autres que ceux du type benzylique, les cétones, les esters, les amides, les composés hétérocycliques, les hydrocarbures, les hydrocarbures halogénés et les phénols.

Dans la formule générale (3) m représente le degré de polycondensation qui peut être par exemple déterminé par les méthodes analytiques usuelles comme la chromatographie d'exclusion sur gel perméable.

Les compositions de précurseurs de polyimides préférées sont celles dans lesquelles dans les composés de formules générales (1), (2) et (3) les groupes $R^1$, $R^2$ et l'un des groupes $R^3$ ou $R^4$ représentent chacun le même groupe hydrocarboné et en particulier celles dans lesquelles ce groupe est un groupe ayant de 1 à 4 atomes de carbone. Le plus souvent les groupes hydrocarbonés $R^1$,$R^2$, l'un des groupes $R^3$ ou $R^4$, et $R^6$ et $R^5$ lorsque celui-ci représente un groupe hydrocarboné sont des groupes alkyles linéaires ou ramifiés. A titre d'exemples de ces groupes alkyles, on peut citer les groupes méthyle, éthyle, propyle, isopropyle, n-butyle, méthyl-1 propyle, méthyl 2-propyle et tertiobutyle. De façon préférée les compositions de précurseurs de polyimides comprennent les composés de formule(1), (2) et (3) dans lesquelles $R^1$, $R^2$ et l'un des $R^3$ ou $R^4$ sont identiques et sont chacun un groupe méthyle ou éthyle.

Dans les compositions préférées de précurseurs de polyimides, le composé de formule (4) est choisi dans le groupe de composés formé par l'alcool benzylique, les alcools méthyl-2 et méthyl-3 benzylique, l'alcool isopropyl-4 benzylique, l'alcool méthoxy-4 benzylique et l'alcool chloro-2 benzylique.

Le composé organique liquide, autre que le ou les alcools benzyliques de formule (4) éventuellement présent dans les compositions de précurseurs de polyimides selon la présente invention est choisi dans le groupe formé par les alcools, les éthers-alcools, les cétones, les esters, les amides, les composés hétérocycliques, les hydrocarbures, les hydrocarbures halogénés et les phénols substitués ou non par des groupes hydrocarbonés ayant de 1 à 16 atomes de carbone et/ou des halogènes. Il représente de préférence de 5 à 30% en poids par rapport au poids du composé (4) contenu dans ladite composition.

A titre d'exemple de ces composés on peut citer pour les alcools : le méthanol, l'éthanol, le propanol; pour les éthers-alcools : le méthoxyéthanol, le diméthoxy-1,2 éthane ou diglyme et l'éthoxy-2 éthanol ou cellosolve; pour les cétones : l'acétone, la méthyléthylcétone et l'acétophénone; pour les esters : l'acétate d'éthyle et le benzoate d'éthyle; pour les amides : le diméthylformamide et diméthylacétamide; pour les composés hétérocycliques: la N-méthylpyrrolidone, le caprolactame et la butyrolactone; pour les hydrocarbures et les hydrocarbures chlorés : le toluène, le xylène et le chlorobenzène et pour les phénols : les crésols, les xylénols et les monochlorophénols.

Dans les compositions selon l'invention que l'on prépare avec ce ou ces composés organiques liquides, on préfère le plus souvent ajouter ce ou ces composés après avoir formé la composition contenant les composés (1), (2), (3) et (4).

Les compositions de précurseurs de polyimides de l'invention peuvent être par exemple préparées selon deux méthodes. La première technique consiste à dissoudre, à une température de préférence inférieure à 150°C, les monomères de formules (1) et (2) par agitation de ces composés solides dans le solvant de formule (4). Le choix d'une température inférieure à 150°C est dicté par le fait qu'au dessus de cette température la réaction de polycondensation des monomères est le plus souvent trop rapide pour qu'il soit possible de contrôler facilement la formation des oligomères de faible massse moléculaire qui servent de liant pour la phase ultérieure de mise en oeuvre des films.

Le traitement thermique préféré dans le cadre de l'invention consiste par exemple en un chauffage d'environ 1 heure à environ 3 heures à une température d'environ 100°C, suivi d'un chauffage d'environ 1 heure à environ 2 heures à une température d'environ 120°C. A la fin de cette réaction d'oligomérisation, la solution contient habituellement en matière sèche d'environ 50% à environ 90% en poids du mélange des monomères (1) et (2) et d'environ 50% à environ 10% en poids d'oligomères de formule (3).

La proportion d'oligomères de formule (3) est, comme indiqué ci-avant, d'environ 10% à environ 50% et elle est le plus souvent d'environ 15% à environ 40% en poids. Lorsque la valeur de la teneur en oligomère descend en dessous de la valeur d'environ 10%, les compositions ou les solutions de ces compositions ont une moins bonne stabilité dans le temps. On a en effet découvert que les monomères (1) et (2) ne forment une solution stable dans le temps, par exemple plusieurs semaines, que s'ils sont associés à une certaine proportion d'oligomères (3). Si la proportion d'oligomères (3) est inférieure à environ 10% et par exemple si elle est d'environ 3% à environ 8%, on observe une reprécipitation au bout de quelques jours. Il est donc souhaitable, si l'on veut une stabilité de la solution pendant plusieurs mois, de rester à l'intérieur de la fourchette de concentration en oligomère (3) mentionnée ci-avant. Si la concentration en oligomère (3) est trop élevée, par exemple si elle est supérieure à environ 50%, le milieu devient extrêmement visqueux et il n'est plus possible d'avoir une concentration importante en matière sèche.

La seconde méthode de préparation des compositions selon l'invention consiste a effectuer dans une première étape une oligomérisation des monomères (1) et (2), par exemple au sein d'un solvant polaire, habituellement par chauffage, par exemple pendant environ 7 heures à environ 15 heures à une température d'environ 120°C, de manière à préparer un mélange d'oligomères de formule générale (3) ayant de préférence un degré de polycondensation moyen de 7 à 15.

Ce mélange d'oligomères peut être isolé par précipitation dans un milieu non solvant comme l'hexane, l'eau ou le méthanol et ajouté ensuite en proportions déterminées dans le solvant de formule (4) contenant les monomères de formules (1) et (2).

Dans les compositions selon l'invention, les composés de formule générale (1) et (2) sont habituellement présents en quantités telles que le rapport pondéral de la quantité du composé (1) à celle du composé (2) soit d'environ 0,6:1 à environ 1,5:1 et le plus souvent d'environ 0,9:1 à environ 1,1:1.

La solution finale obtenue par l'une ou l'autre de ces méthodes est ensuite habituellement filtrée sur une cartouche filtrante qui retient toutes les particules ayant un diamètre supérieur à 5 µm. Une seconde filtration sur un filtre dit absolu permet d'éliminer les particules ayant un diamètre supérieur à 0,2 µm.

La quantité totale de l'ensemble formé par les monomères de formules (1) et (2) et d'oligomères de formule (3) qui est mise en solution dépend de l'application prévue, mais pour obtenir les meilleures propriétés d'aplanissement, il est habituellement préférable de préparer des solutions contenant au minimum 30% en poids de matière sèche et de préférence d'environ 40% à environ 50%. C'est l'application qui conditionne l'épaisseur de la couche de film isolant et cette dernière dépend à la fois de la concentration en monomères et de la technique de mise en oeuvre. D'une façon générale, les films minces ayant par exemple une épaisseur inférieure à 5 µm sont préparés à partir de solutions ayant une concentration en matière sèche d'environ 30% à environ 55% en poids. Les couches ayant une épaisseur supérieure à 5 µm peuvent être fabriquées en utilisant des solutions dont la concentration en monomères peut atteindre 70% en poids.

Le procédé de mise en oeuvre des compositions de l'invention consiste à déposer un film humide à partir d'une solution dont la concentration et la viscosité ont été ajustées pour s'adapter au système d'enduction, par exemple tournette, racle ou pulvérisation, et à chauffer ce film selon un traitement thermique approprié. Ce traitement thermique est habituellement effectué par étapes de façon à évaporer progressivement le solvant et à faire progresser la réaction de polycondensation dans les meilleures conditions. La première étape de chauffage est habituellement faite à une température d'environ 90°C à environ 120°C pendant environ 1 heure et elle conduit à un film régulier et souple constitué d'oligomères de polyimides ayant le plus souvent une masse moléculaire moyenne en nombre de l'ordre de 2000 à 4000 et retenant le plus souvent environ 10% à environ 15% de solvant fortement associé. On peut supposer que c'est cette association moléculaire entre le solvant et le polymère en formation qui est en partie responsable des caractéristiques filmogènes des compositions de l'invention.

La seconde étape de cuisson est habituellement effectuée au-dessus de 150°C et de préférence vers 200°C pour poursuivre l'évaporation du solvant et continuer la réaction de polycondensation. La durée du traitement est de l'ordre d'environ 30 minutes à environ 2 heures et elle conduit à un polybenzhydrolimide ayant habituellement une masse moléculaire moyenne en nombre qui est supérieure à 5000. Ces deux traitements thermiques successifs ont été réalisés à une température inférieure à la température de transition vitreuse du polybenzhydrolimide final qui est le plus souvent d'environ 230°C à environ 250°C.

On sait que les propriétés d'aplanissement d'une résine peuvent être améliorées par un traitement thermique qui permet un écoulement, même faible, du produit polymérisé. Pour cela il est nécessaire de chauffer le polyimide à une température nettement supérieure à sa température de transition vitreuse. Le polymère est alors dans un état viscoplastique et le degré d'aplanissement s'améliore par écoulement du polymère sur la topographie du substrat. La dernière étape consiste donc habituellement en un chauffage entre environ 300°C et environ 400°C, sous air ou en atmosphère inerte pendant environ 30 à environ 60 minutes. A la fin de ce traitement thermique le polyimide est devenu insoluble dans les solvants organiques polaires.

L'invention concerne également l'utilisation de ces compositions dans tous les domaines de l'électronique et de la microélectronique où il est nécessaire de fabriquer des films diélectriques ayant en particulier des propriétés d'aplanissement améliorées par rapport aux polyimides de l'art antérieur, ainsi que l'utilisation de ces compositions comme revêtements isolants pour la protection des métaux tels que ceux cités ci-avant, des alliages métalliques, ou d'autres substrats et en particulier des semiconducteurs tels que par exemple le silicium, le germanium, l'arséniure de gallium et le phosphure d'indium.

L'invention sera décrite de façon plus précise en liaison avec les exemples spécifiques ci-après dans lesquels les détails sont donnés à titre illustratif et non limitatif. Dans ces exemples, la préparation des compositions de précurseurs de polyimides est effectuée sous agitation et en atmosphère inerte. Les opérations finales de filtration des solutions sont effectuées en salle blanche. Dans ces exemples, les concentrations en matière sèche sont données en pourcentage pondéral. Les viscosités dynamiques des solutions sont mesurées à 25°C avec un viscosimètre Haake-Rotovisco équipé d'un système de mesure cône et plateau. La stabilité au stockage des solutions est déterminée par la variation de la viscosité des solutions en fonction du temps à la température ambiante ou à plus basse température dans un réfrigérateur.

Les caractéristiques des films isolants sont déterminées sur des tranches de silicium ayant un diamètre d'environ 10 cm (4 inch). La formation des cycles imides est suivie par spectroscopie infrarouge à transformée

de Fourier et par la mesure de la vitesse de dissolution dans une solution de développeur basique conventionnel. Les masses moléculaires moyennes en nombre sont mesurées par chromatographie sur gel perméable en utilisant un étalonnage interne vrai qui est rendu possible par le fait que la réaction donne successivement toute une série d'oligomères, dimère, trimère, tétramère, etc. parfaitement séparés par la chromatographie sur gel perméable. La température de transition vitreuse des polymères est mesurée par analyse thermomécanique en pénétrométrie. La stabilité thermique est déterminée par analyse thermogravimétrique dynamique avec une rampe de température de 5°C par minute en atmosphère inerte (argon) ou dans l'air.

Dans les exemples 1 à 25, les monomères de formules (1) et (2) employés sont ceux dans lesquels $R^1$ et $R^2$ représentent un groupe méthyle et les oligomères de formule (3) dérivent de ces monomères. Les exemples 24 et 25 sont donnés à titre comparatifs.

**Exemple 1**

Un réacteur de 2 litres, chauffé par circulation de fluide, et équipé d'un système d'agitation et d'une circulation de gaz inerte (azote ou argon) est chargé avec 550 grammes d'alcool benzylique et 450 grammes d'un mélange des monomères (1) et (2) préparé par la méthode décrite au début de l'exemple 3 du brevet US-A-3.609.123. Après 20 minutes d'agitation à la température ambiante, le mélange est chauffé à 40-50°C jusqu'à dissolution complète, puis à 100°C pendant 2 heures et enfin à 120°C pendant 1,5 heure. Après refroidissement à la température ambiante, la viscosité dynamique de la solution est de 800 mPa.s Elle est alors transférée dans un filtre cloche de 2 litres et filtrée sur papier 1015 sous une pression de 2 bars pour retenir toutes les particules ayant un diamètre supérieur à 5 µm. Cette première filtration est suivie d'une seconde opération sur une cartouche filtrante qui retient toutes les particules ayant un diamètre supérieur à 0,2 µm.

L'analyse de la composition montre qu'elle contient 43% en poids de matière sèche formée d'environ 75% du mélange des monomères (1) et (2) et de 25% d'oligomères de formule (3) ayant un degré de polycondensation moyen de 10. Les caractéristiques filmogènes de la composition sont déterminées en appliquant le protocole suivant. Un film humide de précurseur de polyimide est déposé sur une plaque de verre à l'aide d'un filmographe ayant une ouverture de racle de 100 µm. La plaque de verre est transférée dans une étuve à ventilation forcée dont la température est portée à 100°C et maintenue à cette température pendant une heure. La température de l'étuve est élevée jusqu'à 200°C avec une rampe thermique de 5°C par minute et le film est laissé à cette température pendant 2 heures. Le processus est renouvelé pour un traitement final de 1 heure à 300°C. Le film est séparé du support en verre en plongeant l'ensemble dans de l'eau tiède pendant quelques heures. Le film de polyimide est séché sous vide à 150°C jusqu'à poids constant. Le film obtenu est souple et flexible avec une surface continue et exempte de défauts (trous d'épingles, cratères, craquelures,etc). L'étude de ce film par spectroscopie infrarouge montre les bandes caractéristiques des cycles imides et l'absence de bandes d'absorption importantes correspondant aux fonctions réactives des monomères.

Les propriétés d'aplanissement sont mesurées sur des disques de silicium recouverts d'une couche de cuivre de 2 µm d'épaisseur. Le jeu de marches qui sont gravées dans la couche de cuivre par microlithographie correspond à une suite de groupes de lignes parallèles dont la largeur et l'espacement varient de 1 µm à 50 µm. C'est à dire que les lignes dont la largeur est de 1 µm sont séparées l'une de l'autre par un espace de 1 µm, les lignes larges de 2 µm sont espacées de 2 µm, et ainsi de suite jusqu'à 50 µm. La composition de précurseurs de polyimide est déposée sur le disque de silicium à l'aide d'une tournette dont la vitesse de rotation est de 4000 tours par minute, pendant une durée de 40 secondes. Aprés cuisson du film selon le programme thermique indiqué ci-avant, le degré d'aplanissement est mesuré avec un profilomètre Tencor alpha-step. Le degré d'aplanissement varie de 0,95 sur le groupe de lignes de 3 µm à 0,50 sur le groupe de lignes de 50 µm pour une épaisseur du film de polyimide de 4 µm.

La détermination de la stabilité dans le temps de la composition de précurseurs de polyimide est effectuée en conservant le produit dans des flacons hermétiquement bouchés, d'une part à la température ambiante et d'autre part en les mettant dans un réfrigérateur à une température d'environ 5°C. Ces flacons sont ensuite utilisés à intervalles de temps réguliers pour fabriquer des couches d'aplanissement dans les conditions ci-avant. La composition de précurseurs de polyimide ne présente aucunes modifications sensibles après 6 mois de conservation à la température ambiante et 1 an de conservation au réfrigérateur.

**Exemples 2 à 8**

Le protocole expérimental de l'exemple 1 est repris pour préparer des compositions dont la concentration initiale en matière sèche varie de 30% à 70% afin de déterminer la limite maximum de concentration utilisable dans la technique de dépôt à la tournette. Cette limite est habituellement atteinte lorsque la viscosité dynamique de la composition est d'environ 1800 à environ 4000 mPa.s. Au-dessus de ces valeurs, il est habituellement

préférable d'utiliser d'autres méthodes de dépôt comme le trempé, la racle ou la sérigraphie. Les caractéristiques des différentes compositions sont rassemblées dans le Tableau 1.

Tableau 1

| Exemple | Poids en grammes | | Viscosité* |
|---|---|---|---|
| | Réactifs | Solvant | Dynamique |
| 2 | 300 | 700 | 85 |
| 3 | 400 | 600 | 300 |
| 4 | 500 | 500 | 2100 |
| 5 | 550 | 450 | 14800 |
| 6 | 600 | 400 | 135000 |
| 7 | 650 | 350 | 985000 |
| 8 | 700 | 300 | 2000000 |

* en mPa.s à 25°C

**Exemple 9**

Un mélange de 400 grammes des monomères (1) et (2) et de 600 grammes d'alcool benzylique est chauffé pendant 1 heure à 100°C et 7 heures à 120°C pour oligomériser les monomères. Après refroidissement, la solution est versée dans 5 litres de méthanol avec une très forte agitation. Le produit qui précipite est lavé plusieurs fois avec du méthanol puis séché pendant 24 heures à 60°C sous vide. A la fin de cette opération, l'analyse du milieu réactionnel par chromatographie d'exclusion indique que le degré moyen de polycondensation est proche de 10 avec une large distribution des masses moléculaires et qu'il n'y a pratiquement plus de monomères.

On prépare une composition en dissolvant dans 1 litre d'alcool benzylique, 200 grammes du mélange solide des oligomères préparé ci-dessus et 800 grammes du mélange des monomères (1) et (2). La dissolution des réactifs est faite par chauffage à 80°C pendant 1 heure et à 100°C pendant 1 heure. A la fin de cette opération, la teneur en matière sèche est d'environ 49%. Un film préparé comme indiqué dans l'exemple 1 présente de bonnes propriétés mécaniques et une température de transition vitreuse de 250°C. Le degré d'aplanissement, déterminé comme dans l'exemple 1 est de 95% sur les lignes de 1 µm, 65% sur les lignes de 5 µm et 49% sur les lignes de 10 µm.

**Exemples 10 à 21**

Ces exemples montrent le rôle particulier de l'alcool benzylique dans les compositions de l'invention. Divers solvants organiques polaires sont utilisés à la place de cet alcool pour préparer des compositions de précurseurs de polyimides en utilisant les conditions espérimentales de l'exemple 1. Les quantités de produits mis en oeuvre dans ces exemples sont de 40 grammes du mélange des monomères (1) et (2) et des oligomères (3) décrit dans l'exemple 1 et de 60 grammes de solvant. Comme dans l'exemple 1, les solutions obtenues sont utilisées pour fabriquer des films test. Les résultats de ces essais sont regroupés dans le tableau 2

Tableau 2
Etude des solvants de polycondensation

| Exemple | Solvant* | Qualité des films |
|---|---|---|
| 10 | Alcool benzylique-crésol (60:40) | Très bonne |
| 11 | Alcool benzylique/méthanol (80:20) | Très bonne |
| 12 | Alcool benzylique/diglyme (70:30) | Très bonne |
| 13 | Alcool benzylique/DMF (75:25) | Bonne |
| 14 | Alcool tétrahydrofurfurylique | Cratères |
| 15 | Méthoxy-2 éthanol | Cratères |
| 16 | Diglyme | Cratères |
| 17 | γ-butyrolactone | Cratères |
| 18 | Diméthylformamide | Laiteux |
| 19 | Diméthylacétamide | Laiteux |
| 20 | N-méthylpyrrolidone | Laiteux |
| 21 | NMP/xylène (80:20) | Laiteux |

*La composition des mélanges de solvant est donnée en % pondéral.
NMP : N-méthylpyrrolidone, DMF : diméthylformamide,
crésol : *méta*-crésol de synthèse.

Ce tableau montre que les compositions à base d'alcool benzylique donnent des films de meilleure qualité que les solvants de type amide qui conduisent à des films laiteux et opaques ayant de mauvaises propriétés mécaniques.

**Exemple 22**

Une composition de précurseurs de polyimides est préparée comme dans l'exemple 1 en remplaçant l'alcool benzylique par 550 grammes d'alcool méthyl-3 benzylique. La viscosité dynamique de la solution à la fin de la réaction thermique d'oligomérisation est de 770 mPa.s. Le degré d'aplanissement obtenu sur les tranches de silicium test est pratiquement identique à celui qui a été déterminé dans l'exemple 1.

**Exemple 23**

Une composition de précurseurs de polyimides est préparée comme dans l'exemple 1 en remplaçant l'alcool benzylique par 550 grammes d'alcool chloro-2 benzylique. La viscosité dynamique de la solution à la fin de la réaction thermique d'oligomérisation est de 910 mPa.s. Le degré d'aplanissement obtenu sur les tranches de silicium test est pratiquement identique à celui qui a été déterminé dans l'exemple 1.

**Exemple 24** comparatif

Une suspension de 450 grammes du mélange des monomères (1) et (2) dans 550 grammes d'alcool benzylique est fortement agitée à la température ambiante pendant 3 heures. Le mélange est ensuite progressivement chauffé jusqu'à 60°C, puis maintenu à cette température pendant 3 heures jusqu'à dissolution complète des réactifs. L'analyse par chromatographie sur gel perméable montre que dans ces conditions la quantité d'oligomère de formule (3) est inférieure à 7% en poids. La solution refroidie et filtrée à 0,2 µm a une viscosité dynamique de 50 mPa.s. Les films préparés avec cette composition et cuits dans les conditions de l'exemple 1 sont cassants et inutilisables comme couches d'aplanissement. De plus, la composition n'est pas très stable

et les monomères commencent à précipiter du milieu réactionnel après environ 4 jours de conservation à la température ambiante ou 2 jours dans un réfrigérateur.

**Exemple 25** comparatif

Une composition de précurseurs de polyimide est préparée en dissolvant 100 grammes de produit de l'exemple 9, qui est un mélange d'oligomères pratiquement dépourvu de monomères (1) et (2), dans 50 grammes de N-méthylpyrrolidone et en ajoutant ensuite 50 grammes d'alcool benzylique. L'emploi de la N-méthylpyrrolidone comme solvant de base vient de ce que le produit de l'exemple 9 ne peut être remis aisément en solution dans l'alcool benzylique pour atteindre une concentration en matière sèche de 50%. La composition ainsi obtenue a une viscosité dynamique d'environ 50000 mPa.s et elle ne peut pas être déposée sur les tranches de silicium avec une tournette.

## Revendications

**1.** Composition de précurseurs de polyimides caractérisée en ce qu'elle comprend:

a) au moins un composé de formule générale

(1)

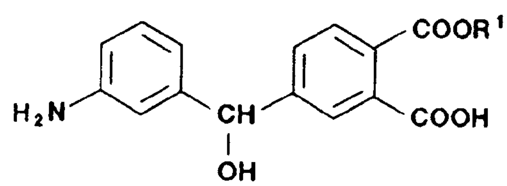

dans laquelle $R^1$ représente un groupe hydrocarboné ayant de 1 à 16 atomes de carbone,

b) au moins un composé de formule générale

(2)

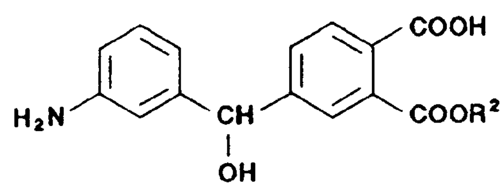

dans laquelle $R^2$ représente un groupe hydrocarboné ayant de 1 à 16 atomes de carbone,

c) au moins un composé de formule générale

(3)

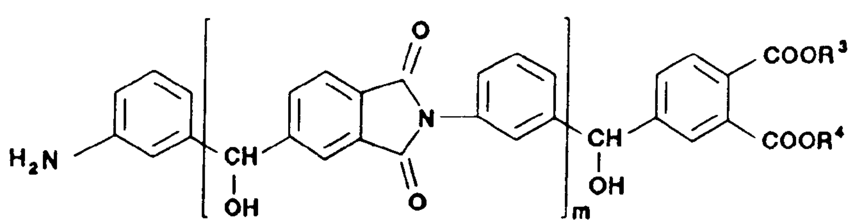

dans laquelle m représente un nombre de 5 à 20, l'un des groupes $R^3$ et $R^4$ représente un atome d'hydrogène et l'autre représente un groupe hydrocarboné ayante de 1 à 16 atomes de carbone, en une proportion de 10 à 50% en poids par rapport au poids de matière sèche de l'ensemble de la composition, et

d) au moins un composé hydroxylé de formule générale

(4)

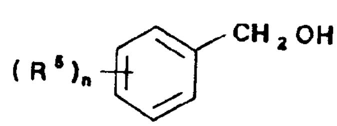

dans laquelle $R^5$ représente un atome d'hydrogène, un atome d'halogène, un groupe hydrocarboné ayant de 1 à 16 atomes de carbone, ou un goupe de formule $R^6$-O- dans laquelle $R^6$ représente un groupe hydrocarboné ayant de 1 à 16 atomes de carbone et n est un nombre entier de 1 à 5; ainsi que, éventuellement, une proportion de 1 à 70% en poids par rapport au poids du composé (4) d'au moins un autre composé choisi dans le groupe formé par les alcools et les éthers-alcools autres que ceux du type benzylique, les cétones, les esters, les amides, les composés hétérocycliques, les hydrocarbures, les hydrocarbures halogénés et les phénols.

2. Composition selon la revendication 1 dans laquelle les groupes $R^1$, $R^2$ et l'un des groupes $R^3$ ou $R^4$ représentent chacun le même groupe hydrocarboné.

3. Composition selon la revendication 2 dans laquelle les groupes $R^1$, $R^2$ et l'un des groupes $R^3$ ou $R^4$ représentent chacun le même groupe hydrocarboné ayant de 1 à 4 atomes de carbone.

4. Composition selon la revendication 3 dans laquelle les groupes $R^1$, $R^2$ et l'un des groupes $R^3$ ou $R^4$ représentent chacun le même groupe méthyle ou éthyle.

5. Composition selon l'une des revendications 1 à 4 dans laquelle le composé hydroxylé est choisi dans le groupe formé par l'alcool benzylique, l'alcool méthyl-2 benzylique, l'alcool méthyl-3 benzylique, l'alcool isopropyl-4 benzylique, l'alcool méthoxy-4 benzylique et l'alcool chloro-2 benzylique.

6. Composition selon l'une des revendications 1 à 5 caractérisée en ce qu'elle contient d'environ 30% à 70% en poids de matière sèche.

7. Composition selon l'une des revendications 1 à 6 caractérisée en ce qu'elle comprend en outre de 1% à 70% en poids, par rapport au poids du composé (4) contenu dans la composition, d'au moins un autre composé choisi dans le groupe formé par les alcools et les éthers-alcools autres que ceux du type benzylique, les cétones, les esters, les amides, les composés hétérocycliques, les hydrocarbures, les hydrocarbures halogénés et les phénols.

8. Utilisation d'une composition selon l'une des revendications 1 à 7 dans la fabrication de revêtements d'aplanissement et/ou de protection d'un métal, d'un alliage métallique ou d'autres substrats.

9. Utilisation d'une composition selon l'une des revendications 1 à 7 dans la fabrication de films diélectriques.

## Patentansprüche

1. Zusammensetzung von Polyimidvorläufern, dadurch **gekennzeichnet**, daß sie
   a) wenigstens eine Verbindung der allgemeinen Formel

(1)

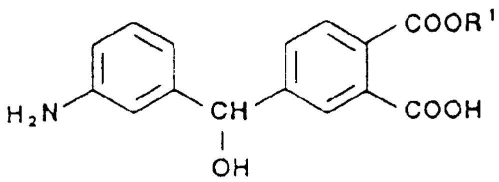

worin $R^1$ eine Kohlenwasserstoffgruppe mit 1 bis 16 Kohlenstoffatomen darstellt,
b) wenigstens eine Verbindung der allgemeinen Formel

(2)

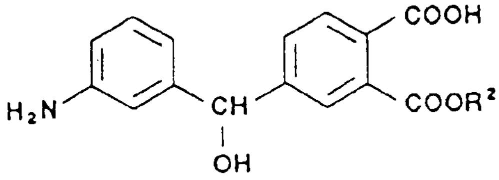

worin $R^2$ eine Kohlenwasserstoffgruppe mit 1 bis 16 Kohlenstoffatomen darstellt,

c) wenigstens eine Verbindung der allgemeinen Formel

( 3 ) 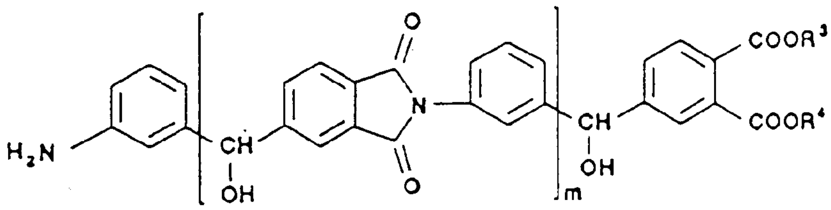

worin m eine Zahl von 5 bis 20 darstellt, eine der Gruppen $R^3$ und $R^4$ ein Wasserstoffatom darstellt, und die andere eine Kohlenwasserstoffgruppe mit 1 bis 16 Kohlenstoffatomen, in einem Verhältnis von 10 bis 50 Gew.-%, bezogen auf das Gewicht der Trockenmasse der gesamten Zusammensetzung und
d) wenigstens eine Hydroxylverbindung der allgemeinen Formel

( 4 ) 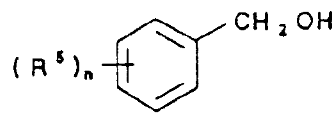

worin $R^5$ ein Wasserstoffatom, ein Halogenatom, eine Kohlenwasserstoffgruppe mit 1 bis 16 Kohlenstoffatomen oder eine Gruppe der Formel $R^6O$- darstellt, worin $R^6$ eine Kohlenwasserstoffgruppe mit 1 bis 16 Kohlenstoffatomen darstellt und n eine ganze Zahl von 1 bis 5 ist; sowie, gegebenenfalls, ein Verhältnis von 1 bis 70 Gew.-%, bezogen auf das Gewicht der Verbindung (4) wenigstens einer anderen Verbindung, ausgewählt aus der Gruppe bestehend aus Alkoholen und Etheralkoholen, andere als diejenigen vom Benzoltyp, aus Ketonen, Estern, Amiden, heterocyclischen Verbindungen, Kohlenwasserstoffen, halogenierten Kohlenwasserstoffen und Phenolen.

2. Zusammensetzung gemäß Anspruch 1, in welcher die Gruppen $R^1$, $R^2$ und eine der Gruppen $R^3$ oder $R^4$ jede die gleiche Kohlenwasserstoffgruppe darstellen.

3. Zusammensetzung gemäß Anspruch 2, in welcher die Gruppen $R^1$, $R^2$ und eine der Gruppen $R^3$ oder $R^4$ jede dieselbe Kohlenwasserstoffgruppe mit 1 bis 4 Kohlenstoffatomen darstellt.

4. Zusammensetzung gemäß Anspruch 3, in welcher die Gruppen $R^1$, $R^2$ und eine der Gruppen $R^3$ oder $R^4$ jede dieselbe Methyl- oder Ethylgruppe darstellen.

5. Zusammensetzung gemäß einem der Ansprüche 1 bis 4, in welcher die Hydroxylverbindung ausgewählt ist aus der Gruppe bestehend aus 2-Methyl-Benzylalkohol, 3-Methyl-Benzylalkohol, 4-Isopropyl-Benzylalkohol, 4-Methoxy-Benzylalkohol und 2-Chloro-Benzylalkohol.

6. Zusammensetzung gemäß einem der Ansprüche 1 bis 5, dadurch **gekennzeichnet**, daß sie etwa 30 bis 70 Gew.-% Trockenmasse enthält.

7. Zusammensetzung gemäß einem der Ansprüche 1 bis 6, dadurch **gekennzeichnet**, daß sie außerdem 1 bis 70 Gew.-%, bezogen auf die in der Zusammensetzung enthaltende Verbindung (4), wenigstens einer anderen Verbindung, ausgewählt aus der Gruppe bestehend aus Alkoholen und Etheralkoholen, anderen als denjenigen vom Benzoltyp, aus Ketonen, Estern, Amiden, heterocyclischen Verbindungen, Kohlenwasserstoffen, halogenierten Kohlenwasserstoffen und Phenolen umfaßt.

8. Verwendung einer Verbindung gemäß einem der Ansprüche 1 bis 7 in der Herstellung von Abgleichs-Bezügen und/oder dem Schutz eines Metalles, einer metallischen Legierung oder anderer Substrate.

9. Verwendung einer Zusammensetzung gemäß einem der Ansprüche 1 bis 7 in der Herstellung von dielektrischen Filmen.

## Claims

1. Polyimide precursor composition, characterized in that it comprises:
   a) at least one compound of general formula

(1) 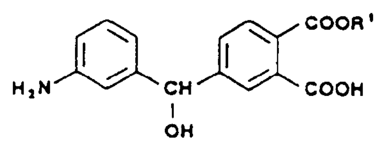

   in which $R^1$ represents a hydrocarbon group with 1 to 16 carbon atoms,
   b) at least one compound of general formula

(2) 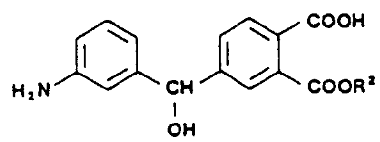

   in which $R^2$ represents a hydrocarbon group with 1 to 16 carbon atoms,
   c) at least one compound of general formula

(3) 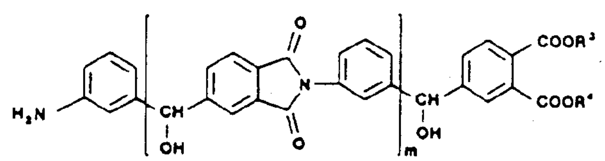

   in which m represents a number from 5 to 20, one of the groups $R^3$ and $R^4$ representing a hydrogen atom and the other representing a hydrocarbon group with 1 to 16 carbon atoms and in a proportion of 10 to 50 % by weight based on the dry matter weight of the complete composition and
   d) at least one hydroxylated compound of general formula

(4) 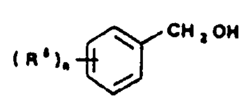

   in which $R^5$ represents a hydrogen atom, a halogen atom, a hydrocarbon group with 1 to 16 carbon atoms, or a group of formula $R^6$-O-, in which $R^6$ represents a hydrocarbon group with 1 to 16 carbon atoms and n is an integer from 1 to 5, as well as optionally a proportion of 1 to 70 % by weight, based on the weight of compound (4), of at least one other compound chosen from within the group formed by alcohols and ether-alcohols other than those of the benzyl type, ketones, esters, amides, heterocyclic compounds, hydrocarbons, halogenated hydrocarbons and phenols.

2. Compositions according to claim 1, wherein the groups $R^1$, $R^2$ and one of the groups $R^3$ or $R^4$ each represent the same hydrocarbon groups.

3. Composition according to claim 2, wherein the groups $R^1$, $R^2$ and one of the groups $R^3$ or $R^4$ each represent the same hydrocarbon group having 1 to 4 carbon atoms.

4. Composition according to claim 3, wherein the groups $R^1$, $R^2$ and one of the groups $R^3$ or $R^4$ each represent the methyl or ethyl group.

5. Composition according to one of the claims 1 to 4, wherein the hydroxylated compound is chosen from the group formed by benzyl alcohol, 2-methyl benzyl alcohol 3-methyl benzyl alcohol, 4-isopropyl benzyl alcohol, 4-methoxy benzyl alcohol and 2-chloro benzyl alcohol.

6. Composition according to one of the claims 1 to 5, characterized in that it contains approximately 30 to approximately 70 % by weight of dry substance.

7. Composition according to one of the claims 1 to 6, characterized in that it also comprises 1 to 70 % by weight, based on the weight of compound (4) contained in the composition, of at least one other compound chosen from the group formed by alcohols and ether alcohols, other than those of the benzyl type, ketones, esters, amides, heterocyclic compounds, hydrocarbons, halogenated hydrocarbons and phenols.

8. Use of a composition according to one of the claims 1 to 7 in the production of softening and/or protective coatings for a metal, a metal alloy or other substrates.

9. Use of a composition according to one of the claims 1 to 7, in the production of dielectric films.